# EUROPÄISCHE PATENTSCHRIFT

(11) **EP 2 411 783 B1**
(45) Veröffentlichungstag und Bekanntmachung des Hinweises auf die Patenterteilung: **22.10.2014**
(21) Anmeldenummer: 10757561.5
(22) Anmeldetag: 12.08.2010
(51) Int. Cl.: G01N 1/28, B01L 7/00, B01L 9/00, G01N 1/06, G01N 1/36, G01N 1/42

(54) **VORRICHTUNG ZUM KÜHLEN PATHOLOGISCHER/HISTOLOGISCHER PRÄPARATE**
DEVICE FOR COOLING PATHOLOGICAL/HISTOLOGICAL PREPARATIONS
DISPOSITIF POUR REFROIDIR DES PRÉPARATIONS PATHOLOGIQUES/HISTOLOGIQUES

(30) Priorität: 31.08.2009 DE 102009039305
(43) Veröffentlichungstag der Anmeldung: 01.02.2012
(73) Patentinhaber: PFM Medical AG, 50996 Köln (DE)
(72) Erfinder: SCHNEIDER, Erwin, 69226 Nussloch (DE); HERMANN, Uwe, 07429 Sitzendorf (DE)
(74) Vertreter: Ullrich & Naumann
(86) Internationale Anmeldenummer: PCT/DE2010/000962
(87) Internationale Veröffentlichungsnummer: WO 2011/023164

(56) Entgegenhaltungen:
- WO-A1-2007/028243
- DE-A1- 3 600 668
- JP-A- 2004 258 017
- JP-A- 2007 225 304

## Beschreibung

Die Erfindung betrifft eine Vorrichtung zum Kühlen pathologischer/histologischer Präparate, insbesondere in Einbettkassetten eingebetteter pathologischer/histologischer Proben vor dem Schneiden mittels eines Mikrotoms. Die Vorrichtung umfasst eine gekühlte Fläche zum Ablegen der Präparate, wobei die Fläche als Oberfläche eines Gehäuses ausgeführt ist, welches mindestens eine Kammer umfasst und wobei die Kammer mit einem Material mit hoher Kältespeicherkapazität gefüllt ist.

Gattungsbildende Vorrichtungen sind in einfachster Form aus der Praxis bekannt. Dabei handelt es sich regelmäßig um Metallplatten, die vor der Benutzung in einem Kühl-/Gefrierschrank entsprechend dem Bedarf gekühlt werden. Je nach der Kältespeicherkapazität des Materials eignen sich solche Vorrichtungen mehr oder weniger zur Verwendung als Kühlplatte im histologischen Labor. Nachteilig ist die sehr begrenzte Kältespeicherkapazität, wonach nämlich die herkömmliche Kühlplatte insbesondere an äußerst heißen Sommertagen sehr schnell die relativ hohe Raumtemperatur annimmt, jedenfalls nur noch unwesentlich kühlt.

Die bekannten Kühlplatten eignen sich zwar grundsätzlich zur Kühlung pathologischer/histologischer Proben, jedoch nur über eine äußerst kurze Zeitspanne hinweg. Geht man davon aus, dass mit einer entsprechenden Kühlplatte um die 20 Einbettkassetten gleichzeitig gekühlt werden können/sollen, nämlich aufgrund der üblicherweise vorgesehenen Fläche, wird deutlich, dass die bekannten Kühlplatten für den genannten Zweck nur wenig taugen. So ist es regelmäßig erforderlich, in kurzen Zeitintervallen die jeweils im Einsatz befindliche Platte durch eine aus dem Gefrierschank kommende, gekühlte Platte auszutauschen, wozu es wiederum erforderlich ist, die pathologischen/histologischen Präparate von der mittlerweile erwärmten Platte zu entnehmen und auf eine frisch gekühlte Platte erneut aufzulegen. Dies ist zeitaufwendig und in der Handhabung problematisch.

Aus der JP 2007 225 304 A ist eine Vorrichtung zum Kühlen pathologischer/histologischer Präparate vorbekannt. Die Vorrichtung weist eine Fläche zum Ablegen der Präparate auf. Des Weiteren ist die Fläche als Oberfläche eines Gehäuses ausgeführt, welches zwei Kammern umfasst, wobei die Kammern mit einem Material mit hoher Kältespeicherkapazität gefüllt sind. Das Gehäuse wird durch den Boden, die Seitenwände und die gekühlte Fläche gebildet. Der Boden ist integral mit den umlaufenden Wandungen des Gehäuses ausgebildet. Die gekühlte Fläche liegt mit ihren Seitenbereichen auf einem Vorsprung der umlaufenden Wandungen auf. Die Fläche ist von den umlaufenden Wandungen abnehmbar ausgestaltet.

Der vorliegenden Erfindung liegt daher die Aufgabe zugrunde, eine Vorrichtung zum Kühlen pathologischer/histologischer Präparate, insbesondere in Einbettkassetten eingebetteter pathologischer/histologischer Proben vor dem Schneiden mittels eines Mikrotoms, derart auszugestalten und weiterzubilden, dass sie sich zur Bereitstellung der erforderlichen Kühlleistung auch über einen längeren Zeitraum hinweg eignet.

Die voranstehende Aufgabe ist durch die Merkmale des Patentanspruch 1 gelöst. Danach ist die gattungsbildende Vorrichtung dadurch gekennzeichnet, dass die Oberfläche und die umlaufenden Wandungen des Gehäuses einteilig ausgeführt sind.

Erfindungsgemäß ist erkannt worden, dass eine hinreichend hohe Kältespeicherkapazität keineswegs durch die Vorkehrung einer reinen Metallplatte als Kühlplatte möglich ist. In Abkehr vom Stand der Technik umfasst die Vorrichtung ein Gehäuse, wobei die zum Ablegen der pathologischen/histologischen Präparate dienende Fläche als Oberfläche des Gehäuses ausgeführt ist. Die Kammer ist mit einem Material gefüllt, welches eine hohe Kältespeicherkapazität hat, jedenfalls eine wesentlich höhere Kältespeicherkapazität, als die bislang verwendeten Metallplatten. Aus fertigungstechnischen Gesichtspunkten und zur besseren Wärmeleitfähigkeit über die gesamte Oberfläche des Gehäuses hinweg ist in erfindungsgemäßer Weise die Oberfläche des Gehäuses und die umlaufenden Wandungen des Gehäuses einteilig ausgeführt.

In Bezug auf den Wärmeübergang von dem in der Kammer befindlichen Material auf das Material des Gehäuses ist es von Bedeutung, dass das Material die Innenfläche des Gehäuses möglichst allseitig kontaktiert. Dabei ist es von ganz besonderem Vorteil, wenn das Material bei Raumtemperatur als formbare Masse, Gel, Granulat oder Pulver ausgeführt ist, wobei es von abermaligem Vorteil ist, wenn das Material die Kammer komplett, d.h. nahezu formschlüssig, ausfüllt. Grundsätzlich ist es denkbar, dass das Material - als solches - in die Kammer gefüllt wird. Insbesondere zur Vermeidung einer Kontamination der Innenwandung der Kammer, vor allem zum einfachen Austausch des Materials, ist es von Vorteil, wenn dieses vorzugsweise in einem Beutel, einer Tasche, etc. verpackt ist. Aufgrund einer entsprechenden Vorkehrung lässt sich das Material nach Öffnen der Kammer einfach austauschen und, vorzugsweise über den Hersteller oder Lieferanten, umweltfreundlich entsorgen.

Bei dem eine hohe Kältespeicherkapazität umfassenden Material handelt es sich in weiter vorteilhafter Weise um ein PCM (Phase Change Material), dessen latente Wärme bei Phasenumwandlung genutzt wird. So lässt sich beispielsweise ein PCM verwenden, welches im Bereich von -20°C und -8°C schmilzt. Die bei der Phasenumwandlung entstehende latente Wärme/Kälte wird genutzt, wodurch sich die Kältespeicherkapazität - im weitesten Sinne - ganz erheblich erhöht.

Außerdem ist es denkbar, dass das PCM in einer Art Saugstruktur integriert ist, wodurch ein auslaufsicherer Zustand realisiert ist.

Für PCM ist wesentlich, dass sich dadurch die zum Auflegen der Präparate dienende Fläche auf bis -20°C kühlen lässt, und dies über einen hinreichend langen Zeitraum hinweg, jedenfalls lange genug, um die Präparate zu be- bzw. verarbeiten. Üblicherweise werden Temperaturen bzw. Kühlhaltezeiten im Bereich von -15°C bis -5°C an der Oberfläche der Vorrichtung benötigt, und zwar über einen Zeitraum von etwa einer Stunde hinweg bei einer Raumtemperatur von 22°C.

Zu dem PCM sei darauf hingewiesen, dass entsprechende Materialien hinreichend aus der Praxis bekannt sind, wobei diese ganz überwiegend bei der Warmhaltung von Speisen Verwendung finden. Aus PCM gefertigte Platten dienen üblicherweise als Untersetzer für Keramikteller bzw. Keramikplatten.

Wie bereits zuvor ausgeführt, befindet sich das PCM in einer durch das Gehäuse gebildeten Kammer. Da die Oberfläche des Gehäuses zum Auflegen der Präparate dient, ist für einen einwandfreien Wärme-/Kälteübergang zwischen dem in der Kammer befindlichen PCM und der Innenwandung des Gehäuses zur sorgen. Letztendlich ist ein unmittelbarer Kontakt zwischen dem PCM und der Innenwandung des Gehäuses von Vorteil.

Insbesondere zur einfacheren Handhabung kleiner Mengen an PCM ist es von weiterem Vorteil, wenn das Gehäuse mindestens zwei voneinander getrennte Kammern umfasst, wobei die Kammern durch einen Steg voneinander getrennt sind. Der Steg ist Bestandteil des Gehäuses. So ist es beispielsweise denkbar, das Gehäuse mit zwei gleichgroßen Kammern auszustatten, die mit identischen Mengen an PCM gefüllt sind.

Nicht nur unter fertigungstechnischen Gesichtspunkten sondern auch zur besseren Wärmeleitfähigkeit über die gesamte Oberfläche des Gehäuses hinweg ist es von Vorteil, wenn die Oberfläche des Gehäuses und die umlaufenden Wandungen des Gehäuses und der die Kammern voneinander trennende Steg einteilig ausgeführt sind. So könnte das Gehäuse druckgusstechnisch gefertigt sein. Selbstverständlich ist es auch möglich, das Gehäuse aus dem Vollen zu arbeiten.

Insbesondere zur Begünstigung der Handhabung der Vorrichtung beim Austausch des eine hinreichend gute Kältekapazität aufweisenden Materials ist es von weiterem Vorteil, wenn die Kammern durch eine Bodenplatte abdichtend geschlossen sind, wobei für das gesamte Gehäuse eine einzige, sich über die Kammern hinweg erstreckende Bodenplatte vorgesehen sein kann. Da die Kälte an der Oberfläche des Gehäuses benötigt wird, kann es von Vorteil sein, die Bodenplatte aus einem thermisch isolierenden Material auszubilden, damit nämlich keine Kälte nach unten abgestrahlt wird. Ganz im Gegenteil wird im Rahmen einer solchen Vorkehrung die Kälte ganz überwiegend nach oben und zur Seite hin abgestrahlt, wobei die Kältewirkung auf der zur Ablage dienenden Fläche benötigt wird.

Zur Abdichtung zwischen der Bodenplatte und dem Gehäuse ist dazwischen eine umlaufende Dichtung vorgesehen, beispielsweise ein O-Ring. Aufgrund der Dichtung ist ein ungewolltes Austreten des in der Kammer bzw. in den Kammern befindlichen Materials, ganz gleich in welchem Aggregatzustand und in welcher Konsistenz, wirksam verhindert.

In Bezug auf die zum Auflegen der Präparate dienende Fläche sei angemerkt, dass diese flach ausgeführt ist. Zur Vermeidung einer Kontamination der Umgebung kann die Fläche durch einen umlaufenden, gegenüber der Fläche geringfügig erhabenen Rand begrenzt sein. Im Konkreten kann die Fläche um ein bis zwei Millimeter tiefer als der Rand ausgebildet sein, so dass auch Flüssigkeiten - jedenfalls in geringem Umfange - auf der Fläche gehalten werden.

Insbesondere zum idealen Wärmeübergang, vor allem aber auch aus Gründen einer einfachen Säuberung, ist die Fläche glatt, vorzugsweise poliert, ausgeführt. Falls erforderlich, kann die Fläche insgesamt oder können einzelne Bereiche mit einer Struktur versehen sein, sofern es die Handhabung des Präparats erfordert.

Das Gehäuse und ggf. die Bodenplatte können aus vorzugsweise eloxiertem Aluminium gefertigt sein, wobei es in vorteilhafter Weise mögliche ist, die Bodenplatte aus einem thermisch isolierenden Material herzustellen. Im Falle der Verwendung von Aluminium sollte dieses möglichst hell eloxiert sein, um nämlich keine unnötige Erwärmung der Platte durch Absorption von Strahlung hervorzurufen. Auch durch diese Maßnahme lässt sich eine anhaltende Kältewirkung begünstigen.

Das Gehäuse lässt sich äußerst dünn ausführen, beispielsweise mit einer Dicke von etwa 20 mm. Länge und Breite sind beliebig, wobei die Handhabung durch Maße im Bereich zwischen 100 bis 300 mm, vorzugsweise etwa 200 mm in Bezug auf die Länge und die Breite begünstigt ist.

Insbesondere in Bezug auf die Austauschbarkeit des die Kältekapazität begünstigenden Materials in der Kammer des Gehäuses ist es von Vorteil, wenn die Bodenplatte vorzugsweise mit vier Schrauben in den Eckbereichen mit dem Gehäuse verschraubt ist. Außerdem ist es von Vorteil, wenn das Gehäuse nicht unmittelbar auf dem Untergrund steht, nämlich zur Vermeidung eines Körperkontakts, der einen ungewollten Kältefluss beispielsweise auf eine als Unterlage dienende Steinplatte begünstigt.

Vielmehr weist das Gehäuse auf der der Bodenplatte zugewandten Seite vorzugsweise aus Gummi oder Kunststoff gefertigte Füße zum Positionieren auf einer ebenen Fläche auf, wobei die Füße einen Abstand zwischen dem Gehäuse und der Stellfläche - zur thermischen Isolation des Gehäuses - definieren.

In ganz besonders vorteilhafter Weise lässt sich die Verschraubung in den Eckbereichen mit der Anbringung der Füße kombinieren, nämlich dadurch, dass die Füße über die Verschraubung der Bodenplatte am Gehäuse befestigt sind. Abermals ist eine Vereinfachung mit hervorragender Wirkung in Bezug auf die Kälteisolation der gesamten Vorrichtung geschaffen.

Ein weiterer Vorteil ergibt sich aus der Ausbildung, Positionierung und Dimensionierung des Gehäuses bzw. des Randes des Gehäuses und der Füße, nämlich derart, dass mehrere Vorrichtungen platzsparend stapelbar sind. Eine solche Stapelbarkeit ist nicht nur bei der Lagerung entsprechender Vorrichtungen von Vorteil, sondern auch bei der Unterbringung in einem Gefrierfach zum Zwecke der Bereitstellung. Die Füße sollten dabei derart positioniert sein, dass sie knapp hinter dem Rand auf der Fläche eines darunter befindlichen Gehäuses zur Anlage kommen, so dass sich mehrere solcher Vorrichtungen übereinander stapelt lassen. Auch ist es denkbar, dass die Flächen im Randbereich mit Aussparungen ausgestattet sind, in die sich die Füße eines darüber befindlichen Gehäuses positionieren lassen, so dass die Vorrichtungen bzw. Gehäuse mit geringst möglichem Abstand zueinander übereinander stapelbar sind.

Schließlich kann es von Vorteil sein, wenn das Gehäuse eine Art Halteeinrichtung aufweist, die zum Befestigen an bzw. auf einem Mikrotom dient. Auch diese Maßnahme erleichtert die Handhabung ganz erheblich, nämlich dann, wenn das Präparat unmittelbar am Mikrotom zu handhaben ist.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung eines Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigen
- Fig. 1: in einer schematischen Draufsicht ein Ausführungsbeispiel einer erfindungsgemäßen Vorrichtung zum Kühlen pathologischer/histologischer Präparate,
- Fig. 2: in einer schematischen Ansicht den Gegenstand aus Fig. 1 von unten und
- Fig. 3: in einer schematischen Explosionszeichnung den Gegenstand aus den Fig. 1 und 2 mit zwei integrierten Kammern im Gehäuse.

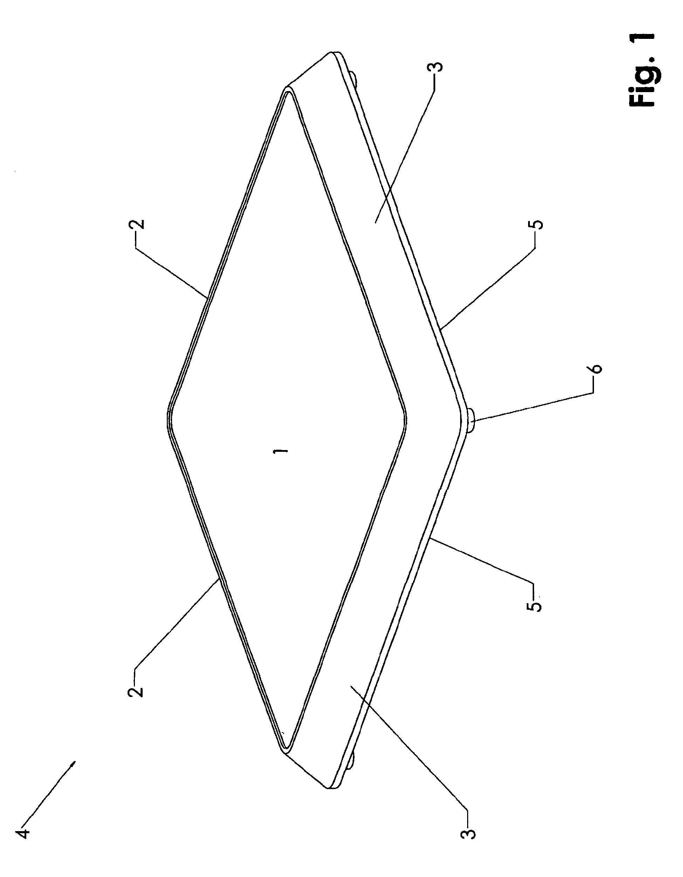

Fig. 1 zeigt in einer schematischen Draufsicht ein Ausführungsbeispiel einer erfindungsgemäßen Vorrichtung zum Kühlen pathologischer/histologischer Präparate, wobei die Vorrichtung insbesondere zum Auflegen von in Einbettkassetten eingebetteter pathologischer/histologischer Proben vor dem Schneiden mittels eines Mikrotoms dient. Die Vorrichtung umfasst eine gekühlte Fläche 1 zum Ablegen von Präparaten, die in den Fig. nicht gezeigt sind.

Fig. 1 zeigt deutlich, dass die Fläche 1 eben bzw. glatt ausgeführt ist. Ein umlaufender Rand 2 begrenzt die Fläche 1. Der umlaufende Rand 2 ist Teil der Gehäusewandung 3. Die Fläche 1 und die Gehäusewandung 3 mit dem umlaufenden Rand 2 bilden das Gehäuse 4.

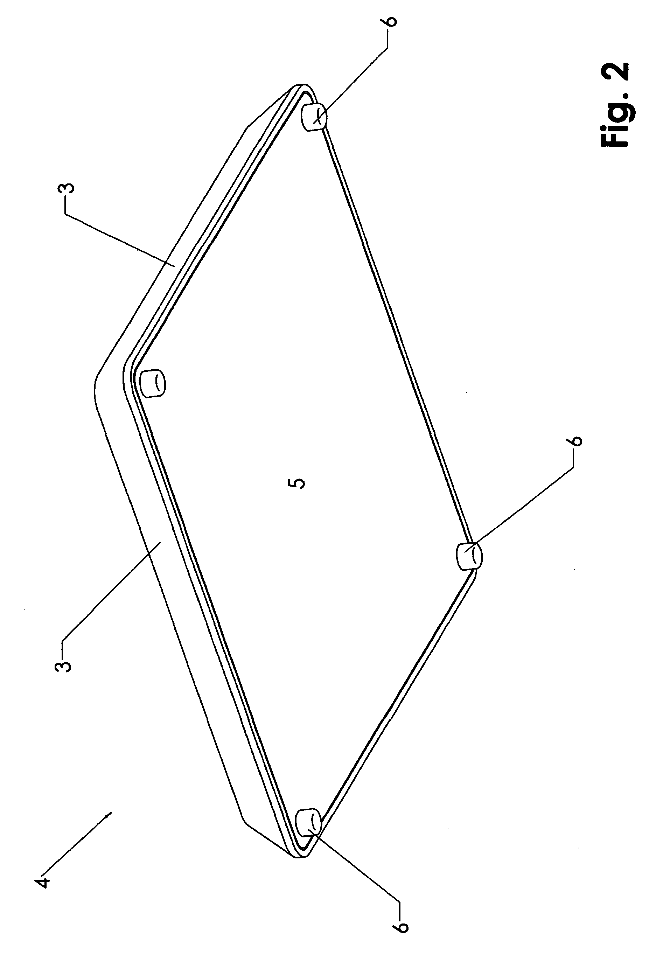

Fig. 2 zeigt den Gegenstand aus Fig. 1 in einer schematischen Ansicht von unten. Die Ansicht von unten lässt die Bodenplatte 5 erkennen, die durch vier Füße 6 mit dem Gehäuse 4 verschraubt ist.

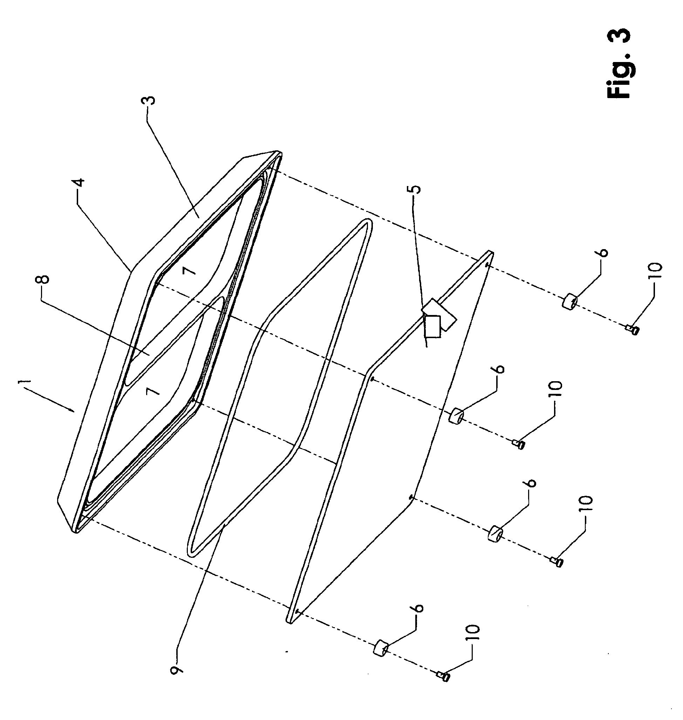

Innerhalb des Gehäuses 4 sind bei dem in Fig. 3 gezeigten Ausführungsbeispiel zwei Kammern 7 ausgebildet, die im geschlossenen Zustand mit einem PCM (Phase Change Material) gefüllt sind, um der gesamten Vorrichtung eine hinreichend große Kältekapazität zu vermitteln. Zur Vermeidung von Wiederholungen sei dazu auf den allgemeinen Teil der Beschreibung verwiesen.

Entsprechend der Darstellung in Fig. 3 sind die beiden Kammern 7 durch einen mittigen Steg 8 voneinander getrennt. Fig. 3 zeigt besonders deutlich, dass die Fläche 1, der umlaufende Rand 2, die Gehäusewandung 3 und der Steg 8 integrale Bestandteile des Gehäuses 4 sind. Zwischen dem Gehäuse 4 und der Bodenplatte 5 ist ein O-Ring 9 als Dichtung vorgesehen, um nämlich einen abdichtenden Abschluss des Gehäuses 4 gewährleisten zu können. Die Bodenplatte 5 ist in den jeweiligen Eckbereichen mittels Schrauben 10 am Gehäuse 4 befestigt, wobei die Schrauben 10 gleichzeitig die aus Gummi gefertigten Füße 6 an der Bodenplatte und somit am Gehäuse 4 befestigen. Es ist auch denkbar, dass die Füße 6, beispielsweise aus Kunststoff gefertigt, integrale Schrauben umfassen, die durch die Bodenplatte 5 hindurch mit dem Gehäuse bzw. der Gehäusewandung 3 verschraubbar sind.

In Bezug auf Merkmale, die sich den Figuren nicht entnehmen lassen, sei zur Vermeidung von Wiederholungen auf den allgemeinen Teil der Beschreibung verwiesen.

Schließlich sei angemerkt, dass das voranstehend erörterte Ausführungsbeispiel lediglich der beispielhaften Erörterung der erfindungsgemäßen Vorrichtung dient, diese jedoch nicht auf das Ausführungsbeispiel einschränkt.

### Bezugszeichenliste

- 1: Fläche
- 2: umlaufender Rand
- 3: Gehäusewandung
- 4: Gehäuse
- 5: Bodenplatte
- 6: Fuß
- 7: Kammer
- 8: Steg
- 9: O-Ring
- 10: Schrauben

## Patentansprüche

1. Vorrichtung zum Kühlen pathologischer/histologischer Präparate, insbesondere in Einbettkassetten eingebetteter pathologischer/histologischer Proben vor dem Schneiden mittels eines Mikrotoms, mit einer gekühlten Fläche (1) zum Ablegen der Präparate,
wobei die Fläche (1) als Oberfläche eines Gehäuses ausgeführt ist, welches mindestens eine Kammer (7) umfasst und wobei die Kammer (7) mit einem Material mit hoher Kältespeicherkapazität gefüllt ist,
**dadurch gekennzeichnet, dass** die Oberfläche (1) und umlaufenden Wandungen (3) des Gehäuses (4) einteilig ausgeführt sind.

2. Vorrichtung nach Anspruch 1, **dadurch gekennzeichnet, dass** das Material bei Raumtemperatur als formbare Masse, Gel, Granulat oder Pulver ausgeführt ist, wobei
das Material vorzugsweise in einem Beutel, einer Tasche, etc. verpackt ist.

3. Vorrichtung nach Anspruch 1 oder 2, **dadurch gekennzeichnet, dass** es sich bei dem Material um PCM (Phase Change Material) handelt, dessen latente Wärme bei Phasenumwandlung genutzt wird, wobei
die Fläche (1) mittels PCM weit unter Raumtemperatur, vorzugsweise bis -20°C, kühlbar ist.

4. Vorrichtung nach einem der Ansprüche 1 bis 3, **dadurch gekennzeichnet, dass** das Gehäuse zwei voneinander getrennte Kammern (7) umfasst, wobei
die beiden Kammern (7) durch einen Steg (8) voneinander getrennt sein können.

5. Vorrichtung nach Anspruch 4, **dadurch gekennzeichnet, dass** die Oberfläche und umlaufenden Wandungen (3) des Gehäuses (4) und der die Kammern (7) voneinander trennende Steg (8) einteilig ausgeführt sind.

6. Vorrichtung nach einem der Ansprüche 1 bis 5, **dadurch gekennzeichnet, dass** die Kammer(n) (7) durch ein Bodenplatte (5) abdichtend geschlossen ist (sind).

7. Vorrichtung nach einem der Ansprüche 1 bis 6, **dadurch gekennzeichnet, dass** zwischen dem Gehäuse und der Bodenplatte (5) eine umlaufende Dichtung, vorzugsweise ein O-Ring (9), angeordnet ist.

8. Vorrichtung nach einem der Ansprüche 1 bis 7, **dadurch gekennzeichnet, dass** die Fläche (1) durch einen umlaufenden, gegenüber der Fläche (1) geringfügig erhabenen Rand (2) begrenzt ist, wobei
die Fläche (1) um 1 bis 2 mm tiefer als der Rand (2) ausgebildet sein kann.

9. Vorrichtung nach einem der Ansprüche 1 bis 8, **dadurch gekennzeichnet, dass** die Fläche (1) glatt, vorzugsweise poliert, ausgeführt ist.

10. Vorrichtung nach einem der Ansprüche 1 bis 9, **dadurch gekennzeichnet, dass** das Gehäuse (4) und ggf. die Bodenplatte (5) aus vorzugsweise eloxiertem Aluminium gefertigt ist/sind.

11. Vorrichtung nach einem der Ansprüche 1 bis 10, **dadurch gekennzeichnet, dass** das Gehäuse (4) eine Dicke von etwa 20 mm hat und/oder
eine Länge und eine Breite im Bereich von jeweils 100 bis 300 mm, vorzugsweise etwa 200 mm, hat.

12. Vorrichtung nach einem der Ansprüche 1 bis 11, **dadurch gekennzeichnet, dass** die Bodenplatte (4) vorzugsweise mit 4 Schrauben (10) in den Eckbereichen mit dem Gehäuse (4) verschraubt ist.

13. Vorrichtung nach einem der Ansprüche 1 bis 12, **dadurch gekennzeichnet, dass** das Gehäuse auf der der Bodenplatte (4) zugewandten Seite vorzugsweise aus Gummi oder Kunststoff gefertigte Füße (6) zum Positionieren auf einer ebenen Fläche aufweist und/oder
dass die Füße (6) über die Verschraubung der Bodenplatte (5) am Gehäuse (4) befestigt sind.

14. Vorrichtung nach einem der Ansprüche 1 bis 13, **dadurch gekennzeichnet, dass** der Rand (2) und die Füße (6) derart ausgebildet, positioniert und dimensioniert sind, dass mehrere Vorrichtungen platzsparend stapelbar sind.

15. Vorrichtung nach einem der Ansprüche 1 bis 14, **dadurch gekennzeichnet**, das das Gehäuse (4) eine Halteeinrichtung zum Befestigen an einem Mikrotom umfasst.

## Claims

1. Device for cooling pathological/histological preparations, in particular pathological/histological samples embedded in embedding cassettes prior to cutting by means of a microtome, having a cooled surface (1) on which the preparations are placed,
wherein the surface (1) is in the form of the surface of a housing which comprises at least one chamber (7) and wherein the chamber (7) is filled with a material having a high cold storage capacity,
**characterised in that the** surface (1) and circumferential walls (3) of the housing (4) are in one piece.

2. Device according to claim 1, **characterised in that** the material is in the form of a mouldable mass, gel, granulate or powder at room temperature, wherein
the material is preferably packed in a bag, a pouch, etc.

3. Device according to claim 1 or 2, **characterised in that** the material is PCM (phase change material), the latent heat of which is used in phase change, wherein
the surface (1) can be cooled by means of PCM far below room temperature, preferably to -20°C.

4. Device according to any one of claims 1 to 3, **characterised in that** the housing comprises two chambers (7) which are separate from one another, wherein
the two chambers (7) can be separated from one another by a web (8).

5. Device according to claim 4, **characterised in that** the surface and circumferential walls (3) of the housing (4) and the web (8) separating the chambers (7) from one another are formed in one piece.

6. Device according to any one of claims 1 to 5, **characterised in that** the chamber(s) (7) is (are) closed in a sealed manner by a base plate (5).

7. Device according to any one of claims 1 to 6, **characterised in that** a circumferential seal, preferably an O-ring (9), is arranged between the housing and the base plate (5).

8. Device according to any one of claims 1 to 7, **characterised in that** the surface (1) is delimited by a circumferential edge (2) which is raised slightly relative to the surface (1), wherein
the surface (1) can be formed from 1 to 2 mm deeper than the edge (2).

9. Device according to any one of claims 1 to 8, **characterised in that** the surface (1) is smooth, preferably polished.

10. Device according to any one of claims 1 to 9, **characterised in that** the housing (4) and optionally the base plate (5) is/are manufactured from preferably anodised aluminium.

11. Device according to any one of claims 1 to 10, **characterised in that** the housing (4) has a thickness of approximately 20 mm and/or
has a length and a width in the range of in each case from 100 to 300 mm, preferably approximately 200 mm.

12. Device according to any one of claims 1 to 11, **characterised in that** the base plate (4) is screwed to the housing (4) preferably by 4 screws (10) in the edge regions.

13. Device according to any one of claims 1 to 12, **characterised in that** the housing has on the side facing the base plate (4) feet (6), preferably made of rubber or plastics material, for positioning on a flat surface, and/or
**in that** the feet (6) are fastened to the housing (4) by the screw fixing of the base plate (5).

14. Device according to any one of claims 1 to 13, **characterised in that** the edge (2) and the feet (6) are so formed and positioned and are of such a size that a plurality of devices are stackable in a space-saving manner.

15. Device according to any one of claims 1 to 14, **characterised in that** the housing (4) comprises a holding device for fixing to a microtome.

## Revendications

1. Dispositif pour le refroidissement de préparations pathologiques/histologiques, en particulier des échantillons pathologiques /histologiques logés dans des cassettes de rangement, avant leur coupe au moyen d'un microtome, comportant une surface (1) refroidie pour y déposer les préparations,
ladite surface (1) étant réalisée en tant que face supérieure d'un boîtier qui comporte au moins une chambre (7), et ladite chambre (7) étant remplie d'un matériau avec une capacité élevée d'accumulation du froid,
**caractérisé en ce que** la face supérieure (1) et les parois (3) périphériques du boîtier (4) sont réalisées d'un seul tenant.

2. Dispositif selon la revendication 1, **caractérisé en ce que** le matériau est réalisé sous forme de pâte formable à température ambiante, gel, granulat ou poudre, ledit matériau étant emballé de préférence dans un sachet, une poche, etc.

3. Dispositif selon la revendication 1 ou 2, **caractérisé en ce que** le matériau est un matériau à changement de phase (MCP), dont la chaleur latente est utilisée lors de la transformation de phase, la surface (1) pouvant être refroidie au moyen du MCP à une température bien inférieure à la température ambiante, de préférence jusqu'à -20°C.

4. Dispositif selon l'une quelconque des revendications 1 à 3, **caractérisé en ce que** le boîtier comporte deux chambres (7) séparées l'une de l'autre, lesdites deux chambres (7) pouvant être séparées l'une de l'autre par une traverse (8).

5. Dispositif selon la revendication 4, **caractérisé en ce que** la face supérieure et les parois (3) périphériques du boîtier (4), ainsi que la traverse (8) séparant les deux chambres (7) l'une de l'autre sont réalisées d'un seul tenant.

6. Dispositif selon l'une quelconque des revendications 1 à 5, **caractérisé en ce que** la/les chambre(s) (7) est/sont fermée(s) de manière étanche par un fond (5).

7. Dispositif selon l'une quelconque des revendications 1 à 6, **caractérisé en ce qu'**un joint d'étanchéité périphérique, de préférence un joint torique (9), est disposé entre le boîtier et le fond (5).

8. Dispositif selon l'une quelconque des revendications 1 à 7, **caractérisé en ce que** la surface (1) est délimitée par un bord (2) périphérique, légèrement en relief par rapport à la surface (1), ladite surface (1) pouvant être réalisée de 1 à 2 mm en profondeur par rapport au bord (2).

9. Dispositif selon l'une quelconque des revendications 1 à 8, **caractérisé en ce que** la surface (1) est lisse, de préférence polie.

10. Dispositif selon l'une quelconque des revendications 1 à 9, **caractérisé en ce que** le boîtier (4) et, le cas échéant, le fond (5) est/sont réalisé(s) de préférence en aluminium anodisé.

11. Dispositif selon l'une quelconque des revendications 1 à 10, **caractérisé en ce que** le boîtier (4) a une épaisseur de 20 mm environ et/ou une longueur et une largeur dans une plage de respectivement 100 à 300 mm, de préférence environ 200 mm.

12. Dispositif selon l'une quelconque des revendications 1 à 11, **caractérisé en ce que** le fond (5) est vissé au boîtier (4) dans les zones d'angle, de préférence au moyen de quatre vis (10).

13. Dispositif selon l'une quelconque des revendications 1 à 12, **caractérisé en ce que** le boîtier, sur le côté orienté vers le fond (4), comporte des pieds (6), réalisés de préférence en caoutchouc ou en matière plastique et destinés à être positionnés sur une surface plane, et/ou
**en ce que** les pieds (6) sont fixés au boîtier (4) par l'intermédiaire de l'assemblage vissé du fond (5).

14. Dispositif selon l'une quelconque des revendications 1 à 13, **caractérisé en ce que** le bord (2) et les pieds (6) sont réalisés, positionnés et dimensionnés de telle sorte que plusieurs dispositifs peuvent être empilés en vue d'un gain de place.

15. Dispositif selon l'une quelconque des revendications 1 à 14, **caractérisé en ce que** le boîtier (4) comporte un dispositif de fixation pour la fixation sur un microtome.
